# EUROPEAN PATENT SPECIFICATION

(11) **EP 4 439 072 B1**
(45) Date of publication and mention of the grant of the patent: **20.05.2026**
(21) Application number: 24166234.5
(22) Date of filing: 26.03.2024
(51) Int. Cl.: G01N 35/00, B01L 7/00

(54) **SPECIMEN MEASUREMENT APPARATUS AND MAINTENANCE METHOD**
PROBENMESSVORRICHTUNG UND WARTUNGSVERFAHREN
APPAREIL DE MESURE D'ÉCHANTILLON ET PROCÉDÉ DE MAINTENANCE

(30) Priority: 31.03.2023 JP 2023057050
(43) Date of publication of application: 02.10.2024
(73) Proprietor: SYSMEX CORPORATION, Kobe-shi Hyogo 651-0073 (JP)
(72) Inventor: KAWAMOTO, Yutaka, Kobe-shi, Hyogo, 651-0073 (JP); KATSUMI, Hironori, Kobe-shi, Hyogo, 651-0073 (JP)
(74) Representative: Hoffmann Eitle

(56) References cited:
- EP-A1- 3 100 788
- WO-A1-2022/049722

## Description

### FIELD OF THE INVENTION

The present invention relates to a specimen measurement apparatus and a maintenance method.

### BACKGROUND OF THE INVENTION

WO 2022/049722 A1 discusses a cooling box for storing a reagent and the like in a cold state.

A specimen measurement apparatus includes a reagent container storage portion in which a plurality of reagent containers are stored. For example, the device disclosed in Japanese Laid-Open Patent Publication No. H2-184345 includes a reagent bottle table. Electronic cooling means for cooling a reagent in the reagent bottle table is disposed at the bottom of the reagent bottle table.

The cooling unit such as the above-described electronic cooling means may deteriorate or malfunction when the cooling unit has been used for a long time period. In such a case, the cooling unit may be replaced. However, for the device disclosed in Japanese Laid-Open Patent Publication No. H2-184345, replacement of the cooling unit disposed in the reagent bottle table has not been considered at all.

The present invention has been made in view of such circumstances, and an object of the present invention is to provide a specimen measurement apparatus and a maintenance method for the specimen measurement apparatus in which a cooling unit for cooling a reagent container storage portion can be easily dismounted and mounted.

### SUMMARY OF THE INVENTION

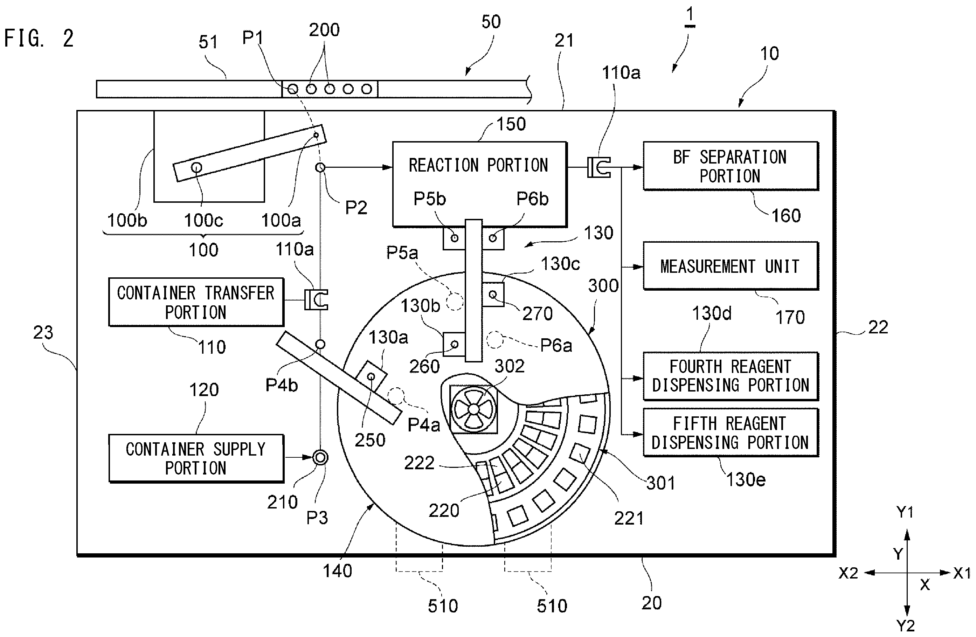

The mentioned problems are solved by the subject-matter of the independent claims. Further preferred embodiments are defined in the dependent claims. Subject matter discussed throughout the following but not falling under the scope of the claims does not form part of the invention. As illustrated in FIG. 2, and FIG. 6 to FIG. 12, a specimen measurement apparatus includes: a measurement unit (170) configured to measure a specimen by using a reagent; a reagent container storage portion (140) configured to store a reagent container (220 to 222) in which the reagent is stored; a cooling unit (500) configured to cool the reagent container storage portion (140); and a holder (510) slidably mounted to the reagent container storage portion (140) in a state where the holder (510) holds the cooling unit (500).

In the specimen measurement apparatus, the holder (510) can be slid relative to the reagent container storage portion (140) in a state where the holder (510) holds the cooling unit (500). Therefore, a position of the cooling unit (500) relative to the reagent container storage portion (140) can be shifted to a position suitable for the operation. As a result, the cooling unit (500) can be easily dismounted and mounted.

As illustrated in FIG. 2, and FIG. 6 to FIG. 12, a maintenance method is directed to a maintenance method for performing maintenance of a specimen measurement apparatus (1) including: a measurement unit (170) configured to measure a specimen by using a reagent; a reagent container storage portion (140) configured to store a reagent container (220 to 222) in which the reagent is stored; a cooling unit (500) configured to cool the reagent container storage portion (140); and a holder (510) slidably mounted to the reagent container storage portion (140) in a state where the holder (510) holds the cooling unit (500). The maintenance method includes: dismounting the holder holding the cooling unit (500) from the reagent container storage portion (140); and mounting the holder (510) holding a new cooling unit (500) or a new holder (510) holding a new cooling unit (500) to the reagent container storage portion (140).

In the maintenance method, the holder (510) slidably mounted to the reagent container storage portion (140) in a state where the holder (510) holds the cooling unit (500) is dismounted from and mounted to the reagent container storage portion (140). Therefore, the cooling unit (500) can be easily dismounted from and mounted to the reagent container storage portion (140).

According to an aspect, the cooling unit for cooling the reagent container storage portion can be easily dismounted and mounted.

### BRIEF DESCRIPTION OF THE DRAWINGS

FIG. 1 is a perspective view of an outer appearance of a specimen measurement apparatus according to an embodiment;
FIG. 2 illustrates an example of an internal configuration of the specimen measurement apparatus;
FIG. 3 illustrates an outer appearance of a reagent container storage portion;
FIG. 4 illustrates an internal configuration of the reagent container storage portion;
FIG. 5 illustrates an internal configuration of the reagent container storage portion;
FIG. 6 is a perspective view of a configuration of a cooling mechanism disposed at a bottom portion of the reagent container storage portion;
FIG. 7 is a partial cross-sectional view of the configuration of the cooling mechanism of the reagent container storage portion;
FIG. 8 is a perspective view of a holder for holding a cooling unit;
FIG. 9 illustrates a mechanism for moving the holder at the reagent container storage portion;
FIG. 10 illustrates the mechanism for moving the holder;
FIG. 11 illustrates a state where the holder is moved;
FIG. 12 illustrates a state where the holder has been dismounted from the reagent container storage portion;
FIG. 13 illustrates an example of a configuration of a control unit of the specimen measurement apparatus;
FIG. 14 is a flow chart showing an example of main process steps of immunoassay;
FIG. 15 illustrates an example of the immunoassay; and
FIG. 16 illustrates a connection member for connecting a plurality of the holders to each other.

### DETAILED DESCRIPTION

A specimen measurement apparatus and a maintenance method for the specimen measurement apparatus according to an exemplary embodiment of the present disclosure will be described below in detail with reference to the drawings.

### <Configuration of specimen measurement apparatus>

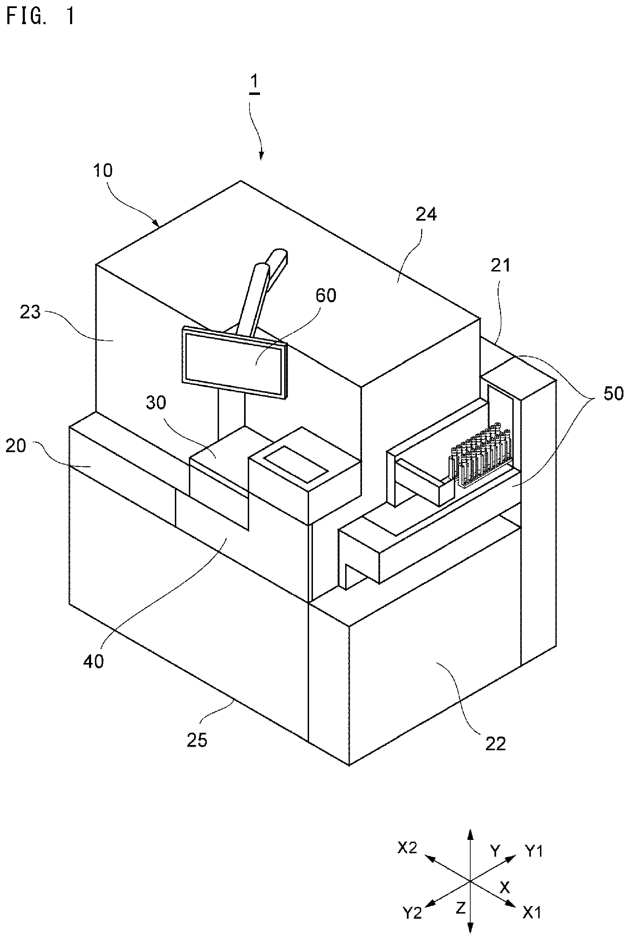

FIG. 1 is a perspective view of an outer appearance of a specimen measurement apparatus 1 according to the present embodiment. FIG. 2 illustrates an example of an internal configuration of the specimen measurement apparatus 1. In one example, the specimen measurement apparatus 1 is a specimen analyzer for measuring and analyzing a specimen with use of a reagent.

As shown in FIG. 1, the specimen measurement apparatus 1 has an almost rectangular-parallelepiped-shaped housing (apparatus housing) 10. The housing 10 has a front surface portion 20, a rear surface portion 21, a right side surface portion 22, a left side surface portion 23, an upper surface portion 24, and a bottom surface portion 25. In the present specification, "left" and "right" of the specimen measurement apparatus 1 are based on directions defined by viewing the front surface portion 20 from the front surface side. In the present specification, the front-rear direction of the specimen measurement apparatus 1 is also referred to as Y direction (the rear direction is Y1 direction, the front direction is Y2 direction), the left-right direction thereof is also referred to as X direction (the right direction is X1 direction, the left direction is X2 direction), and the up-down direction thereof is also referred to as Z direction.

The front surface portion 20 has a plurality of openable/closable portions for allowing access to an internal space of the housing 10. For example, the front surface portion 20 has an openable/closable portion 30 through which a reagent container is put in and taken out from a reagent container storage portion 140 described below. The front surface portion 20 has a front cover 40 through which the reagent container storage portion 140 is accessed from the front surface side at the time of maintenance. The front cover 40 is detachably attached to the housing 10 through bolts, screws, and the like. The reagent container storage portion 140 and a holder 510 described below are disposed near the front cover 40 in, for example, a range of 1 mm or less therefrom. Thus, the holder 510 can be dismounted from the reagent container storage portion 140 in a state where the front cover 40 is detached. The front cover 40 is disposed on an extension of a rail 620, described below, for moving the holder 510. A detachable heat insulating material may be disposed between the front cover 40 and the reagent container storage portion 140.

The right side surface portion 22 and the rear surface portion 21 have a specimen transport unit 50 for transporting a specimen container held by a specimen rack. A specimen container transported into the right side surface portion 22 is transported from the right side surface portion 22 to the rear surface portion 21 by the specimen transport unit 50.

The upper surface portion 24 has a monitor 60 as a display unit. The monitor 60 is a touch-panel-type display. Information for an operation required for measuring a specimen can be inputted to the monitor 60, and various information and information of specimen measurement results can be displayed on the monitor 60.

As illustrated in FIG. 2, the specimen measurement apparatus 1 includes, inside the housing 10, a specimen dispensing portion 100, a container transfer portion 110, a container supply portion 120, a reagent dispensing portion 130 (130a to 130e), the reagent container storage portion 140, a reaction portion 150, a BF separation portion 160, and a measurement unit 170.

The specimen dispensing portion 100 can suction a specimen from a specimen container 200 transported to a specimen suctioning position P1 by the specimen transport unit 50, and dispense the suctioned specimen into a reaction container 210 positioned at a specimen dispensing position P2. The specimen dispensing portion 100 is disposed near the end portion, on the rear surface side (Y1 direction side), of the housing 10 and near the end portion on the left side (X2 direction side).

The specimen dispensing portion 100 has a nozzle 100a for performing suctioning and dispensing, and a nozzle moving mechanism 100b for moving the nozzle 100a. The nozzle moving mechanism 100b can perform an operation of rotating the nozzle 100a around a rotation shaft 100c and an operation of moving the nozzle 100a in the up-down direction. The specimen dispensing portion 100 can move the nozzle 100a to the specimen suctioning position P1 on a transport path 51 of the specimen transport unit 50 and the specimen dispensing position P2 by rotation around the rotation shaft 100c. The specimen dispensing portion 100 can move the nozzle 100a into the specimen container 200 positioned at the specimen suctioning position P1 and can move the nozzle 100a outward from the specimen container 200 by moving the nozzle 100a in the up-down direction. The specimen dispensing portion 100 can move the nozzle 100a into the reaction container 210 positioned at the specimen dispensing position P2 and can move the nozzle 100a outward from the reaction container 210 by moving the nozzle 100a in the up-down direction.

The container transfer portion 110 can transfer the reaction container 210 in the housing 10. The container transfer portion 110 can take an empty reaction container 210 from the container supply portion 120, and transfer the reaction container 210 to positions at which the specimen dispensing portion 100, the reagent dispensing portion 130 (130a to 130e), the reaction portion 150, the BF separation portion 160, and the measurement unit 170 perform processing. The container transfer portion 110 has a catcher 110a for holding the reaction container 210, and a moving mechanism for moving the catcher 110a. The moving mechanism may be an orthogonal robot that is movable in three orthogonal axis directions including the up-down direction, the left-right direction, and the front-rear direction. The moving mechanism may include an arm mechanism that horizontally rotates around a rotation shaft, and a multi-joint robot mechanism.

In the container supply portion 120, a plurality of unused reaction containers 210 can be stored. The container supply portion 120 can supply an unused empty reaction container 210 to the container transfer portion 110 at a predetermined container supply position P3.

The reagent dispensing portion 130 can suction reagents in reagent containers 220 to 222, and dispense the suctioned reagents into the reaction container 210. The reagent dispensing portion 130 includes a first reagent dispensing portion 130a for dispensing an R1 reagent in the reagent container 220, a second reagent dispensing portion 130b for dispensing an R2 reagent in the reagent container 221, and a third reagent dispensing portion 130c for dispensing an R3 reagent in the reagent container 222. The reagent dispensing portion 130 further includes a fourth reagent dispensing portion 130d for dispensing an R4 reagent and a fifth reagent dispensing portion 130e for dispensing an R5 reagent. The reagent containers 220, 221, 222 are stored in the reagent container storage portion 140.

The first reagent dispensing portion 130a has a nozzle 250 for suctioning and dispensing the R1 reagent. The first reagent dispensing portion 130a can move the nozzle 250 to a suctioning position P4a at which the R1 reagent in the reagent container 220 is suctioned, and an R1 reagent dispensing position P4b at which the R1 reagent is dispensed into the reaction container 210.

The second reagent dispensing portion 130b has a nozzle 260 for suctioning and dispensing the R2 reagent. The second reagent dispensing portion 130b can move the nozzle 260 to a suctioning position P5a at which the R2 reagent in the reagent container 221 is suctioned, and an R2 reagent dispensing position P5b at which the R2 reagent is dispensed into the reaction container 210.

The third reagent dispensing portion 130c has a nozzle 270 for suctioning and dispensing the R3 reagent. The third reagent dispensing portion 130c can move the nozzle 270 to a suctioning position P6a at which the R3 reagent in the reagent container 222 is suctioned, and an R3 reagent dispensing position P6b at which the R3 reagent is dispensed into the reaction container 210.

The fourth reagent dispensing portion 130d and the fifth reagent dispensing portion 130e are disposed at positions different from the positions in the reagent container storage portion 140. The fourth reagent dispensing portion 130d and the fifth reagent dispensing portion 130e are connected through liquid sending tubes to reagent containers for storing the R4 reagent and the R5 reagent, respectively, and can dispense the reagents into the reaction container 210 transferred by the container transfer portion 110. The reagent containers in which the R4 reagent and the R5 reagent are stored may be disposed near the front surface portion 20 of the housing 10.

The reagent container storage portion 140 can store the reagent containers 220, 221, 222 for the R1 to R3 reagents. The reagent container storage portion 140 is disposed near the front surface portion 20 of the housing 10. The configuration of the reagent container storage portion 140 will be described below in detail.

The reaction portion 150 includes a heater and a temperature sensor, and can hold the reaction container 210 and heat a sample (specimen and reagent) stored in the reaction container 210 to cause a reaction.

The BF separation portion 160 can perform a BF separation process for separating the sample in the reaction container 210. For example, the BF separation portion 160 can suction a liquid component in the reaction container 210 by a suction tube in a state where complexes including magnetic particles are collected by a magnetic force. Thus, the BF separation portion 160 can separate and remove, from the complexes, unnecessary substances which are contained in the liquid component and are not bound to magnetic particles in the reaction container 210.

The measurement unit 170 can optically measure the sample in the reaction container 210. For example, the measurement unit 170 can detect, by a photodetector, light generated during reaction between a labeled antibody (labeled substance) bound to an antigen of the specimen, and a chemiluminescent substrate, and output measurement data based on a detected light amount. The photodetector may include a photomultiplier.

### <Configuration of reagent container storage portion>

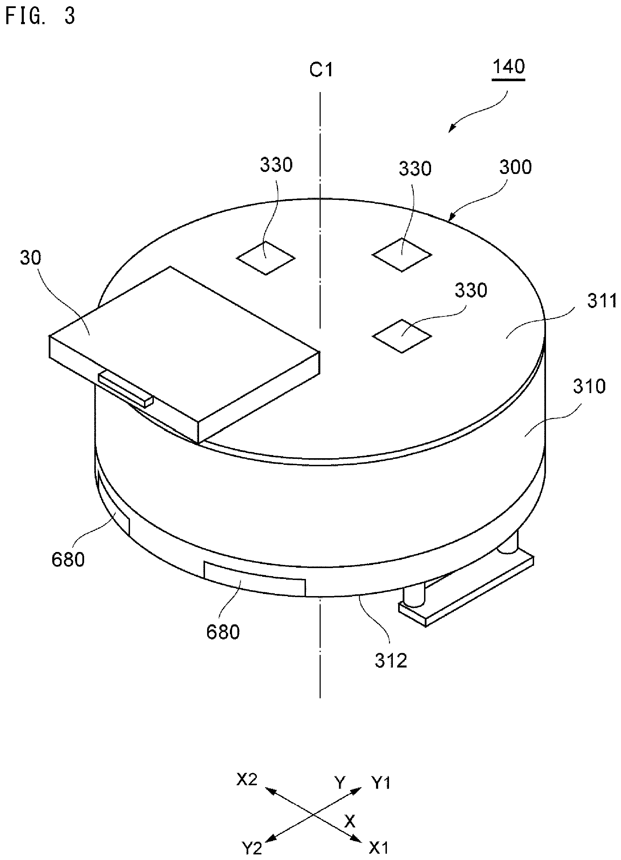

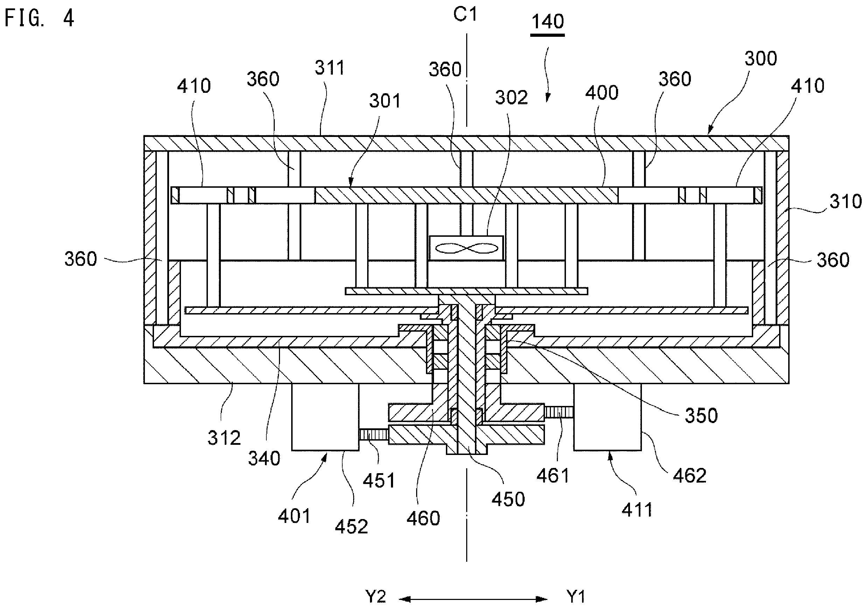

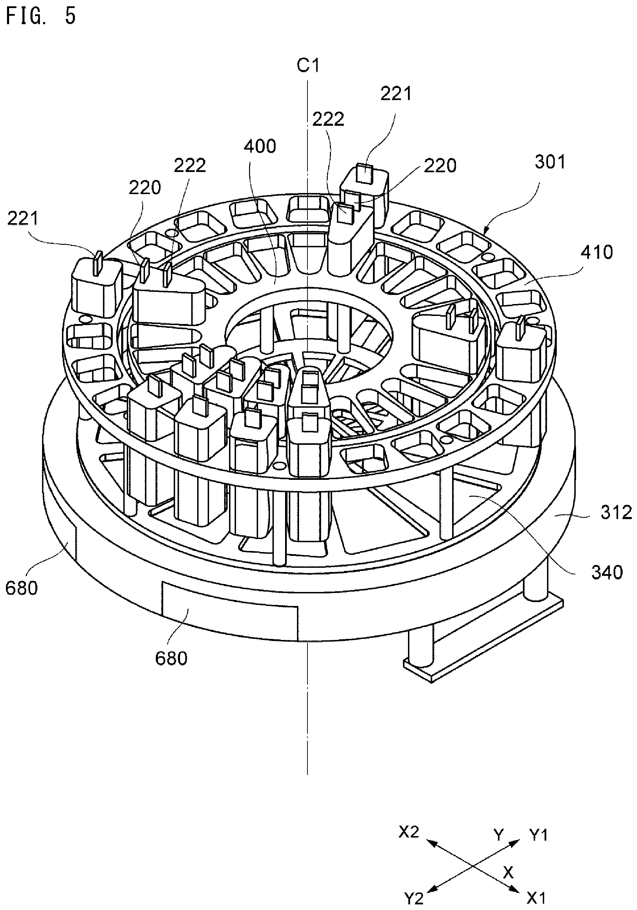

As illustrated in FIG. 2, the reagent container storage portion 140 includes a heat-insulating case 300, a container holding portion 301 for holding the reagent containers 220 to 222 in the case 300, and a fan 302. FIG. 3 illustrates an outer appearance of the reagent container storage portion 140. FIG. 4 and FIG. 5 illustrate an internal configuration of the reagent container storage portion 140.

As illustrated in FIG. 3 and FIG. 4, the case 300 has an almost columnar outer appearance. The case 300 has a cylindrical circumferential side portion 310, a disk-shaped upper portion 311, and a disk-shaped bottom portion 312. The case 300 may have a heat insulating material that covers a part or the entirety of the outer surface.

As illustrated in FIG. 3, the upper portion 311 has the openable/closable portion 30 through which the reagent containers 220 to 222 are put and taken out. The upper portion 311 has holes 330 formed at positions corresponding to the suctioning positions P4a, P5a, and P6a for the nozzles 250, 260, and 270 of the reagent dispensing portion 130. The holes 330 are openable and closable. The nozzles 250, 260, and 270 of the reagent dispensing portion 130 can be moved into the case 300 through the holes 330, and can suction reagents in the reagent containers.

As illustrated in FIG. 4, the bottom portion 312 has a bottom plate 340 having high thermal conductivity. The bottom plate 340 is disk-shaped, and has, at its center, a hole 350 into which rotation shafts 450, 460 described below are inserted. The bottom plate 340 may be formed of a metal such as aluminum. The bottom plate 340 is exposed to the internal space of the case 300, and the upper surface of the bottom plate 340 forms the bottom of the internal space. The outer side portion of the bottom plate 340 in the bottom portion 312 may be covered with a heat insulating material.

The circumferential side portion 310 has a plurality of supports 360 erected in the up-down direction. The plurality of supports 360 are equally spaced on the same circumference along the circumferential direction. The support 360 is erected on the upper surface of the bottom plate 340. A portion around the support 360 in the circumferential side portion 310 is covered with a heat insulating material.

The container holding portion 301 has a first holding member 400 and a first rotation mechanism 401 for rotating the first holding member 400, and a second holding member 410 and a second rotation mechanism 411 for rotating the second holding member 410.

As illustrated in FIG. 5, the first holding member 400 is formed into an annular shape, and can hold a plurality of reagent containers aligned in the circumferential direction. The first holding member 400 can concentrically hold the reagent containers so as to form two circles. The first holding member 400 can hold the reagent containers 222 on the inner circumferential side, and can hold the reagent containers 220 on the outer circumferential side. The reagent containers 222 and the reagent containers 220 may be integrated with each other.

As illustrated in FIG. 4, the first rotation mechanism 401 has the rotation shaft 450 connected to the first holding member 400 and a motor 452 that rotates the rotation shaft 450 through a belt 451. The rotation shaft 450 is disposed on a center axis C1 of the case 300 along the up-down direction. The rotation shaft 450 penetrates through the hole 350 of the bottom plate 340, and extends downward of the bottom portion 312. The motor 452 is fixed to the lower surface of the bottom portion 312. The belt 451 connects between the rotation shaft 450 and the motor 452 below the bottom portion 312. The first holding member 400 can be rotated around the center axis C1 by the first rotation mechanism 401, and a predetermined reagent container 222, 220 held by the first holding member 400 can be moved to a position immediately below the suctioning position P4a, P6a (hole 330).

As illustrated in FIG. 5, the second holding member 410 is formed in an annular shape, and can hold a plurality of the reagent containers 221 aligned in the circumferential direction. The second holding member 410 is disposed on the circumference outward of the first holding member 400.

As illustrated in FIG. 4, the second rotation mechanism 411 has the rotation shaft 460 connected to the second holding member 410, and a motor 462 that rotates the rotation shaft 460 through a belt 461. The rotation shaft 460 is disposed on the center axis C1 of the case 300 along the up-down direction. The rotation shaft 460 is formed in a tubular shape, and disposed on the circumference outward of the rotation shaft 450. The rotation shaft 460 penetrates through the hole 350 of the bottom plate 340, and extends downward of the bottom portion 312. The motor 462 is fixed to the lower surface of the bottom portion 312. The belt 461 connects between the rotation shaft 460 and the motor 462 below the bottom portion 312. The second holding member 410 can be rotated around the center axis C1 by the second rotation mechanism 411, and a predetermined reagent container 221 held by the second holding member 410 can be moved to a position immediately below the suctioning position P5a (hole 330).

The fan 302 is disposed in an internal space of the case 300. The fan 302 is disposed on the center axis C1 of the case 300. The fan 302 is disposed near the center of the internal space of the case 300 in the up-down direction. The fan 302 is oriented downward, and can send air toward the bottom plate 340.

### <Configuration of cooling mechanism of reagent container storage portion>

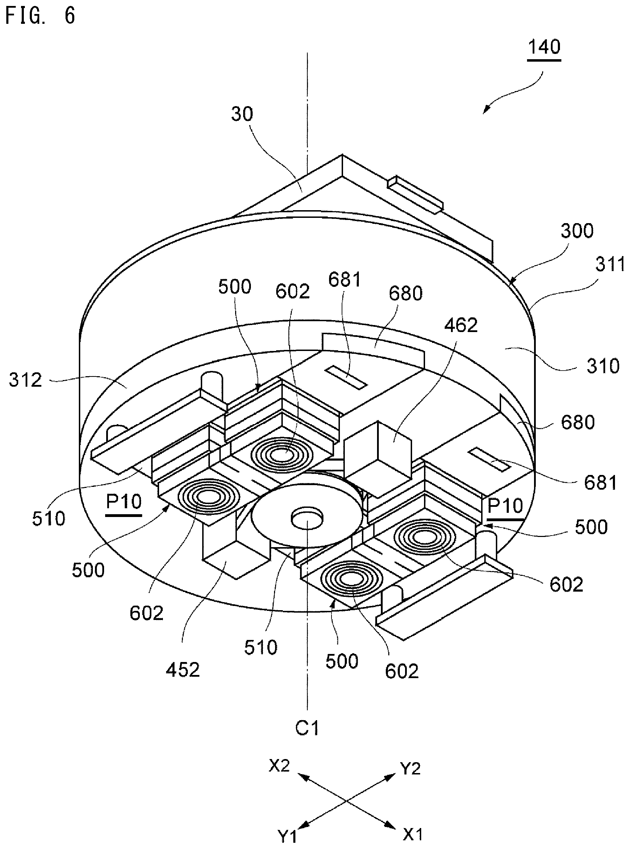

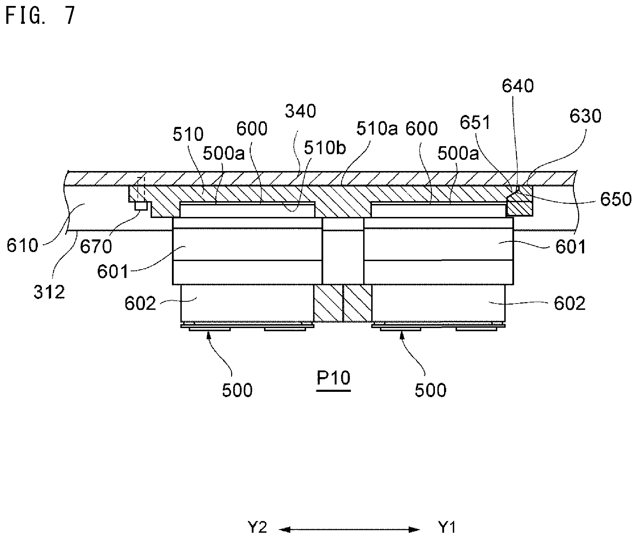

The specimen measurement apparatus 1 has a cooling mechanism for cooling and maintaining a reagent in the reagent container in the reagent container storage portion 140 at a predetermined temperature. FIG. 6 is a perspective view of a configuration of the cooling mechanism disposed at the bottom portion 312 of the reagent container storage portion 140. FIG. 7 is a partial cross-sectional view of the configuration of the cooling mechanism of the reagent container storage portion 140.

As illustrated in FIG. 6 and FIG. 7, the specimen measurement apparatus 1 has a cooling unit 500 for cooling a predetermined portion of the reagent container storage portion 140, and the holder 510 that holds the cooling unit 500, is in contact with a portion of the reagent container storage portion 140, and is slidable relative to the portion.

The cooling unit 500 can cool the bottom plate 340 of the bottom portion 312 of the reagent container storage portion 140. As illustrated in FIG. 7, the cooling unit 500 may be a Peltier unit that integrally has a Peltier device 600, a heat dissipating member 601, and a heat dissipating fan 602. The cooling unit 500 has a structure in which the heat dissipating fan 602, the heat dissipating member 601, and the Peltier device 600 are stacked in order, respectively, from the lower side. The Peltier device 600 has a cooling surface 500a disposed at the upper surface of the cooling unit 500. The cooling unit 500 may be rectangular-parallelepiped-shaped. The cooling surface 500a may be a flat surface.

The holder 510 has a lower surface (holding surface) 510b for holding the cooling unit 500 in a state where the lower surface 510b is in contact with the cooling surface 500a, and an upper surface (contact surface) 510a that is in contact with the bottom plate 340 of the reagent container storage portion 140. That is, the cooling unit 500 can cool the bottom plate 340 of the reagent container storage portion 140 through the holder 510. As a material of the holder 510, a metal, such as aluminum, having high thermal conductivity is used. The holding surface 510b and the contact surface 510a of the holder 510 may be flat surfaces. The cooling surface 500a of the Peltier device 600, the holding surface 510b and the contact surface 510a of the holder 510, and a cooling surface (lower surface) of the bottom plate 340 are flat surfaces and are in close contact with each other. Therefore, heat of the cooling unit 500 can be efficiently transmitted to the bottom plate 340.

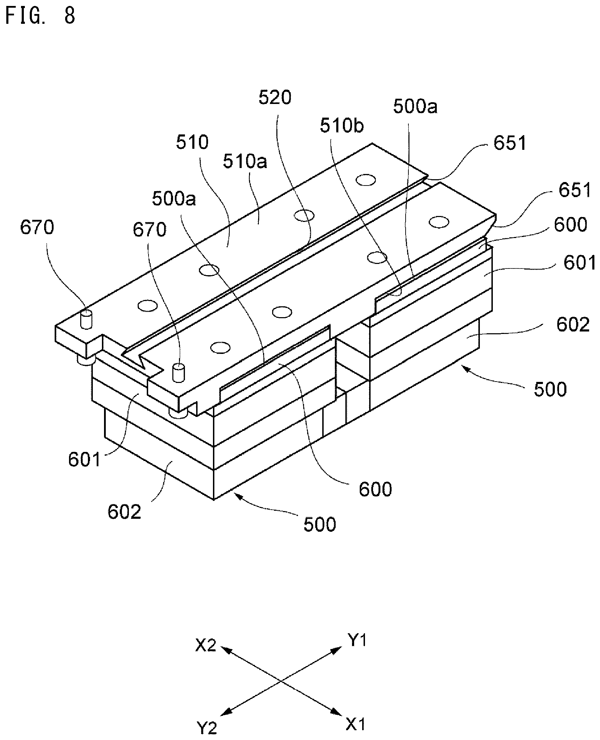

As illustrated in FIG. 8, the holder 510 has a plate-like rectangular shape elongated in the Y direction. The holder 510 holds the two cooling units 500 aligned in the Y direction. As illustrated in FIG. 6, the two holders 510 are disposed on both sides of the bottom portion 312 of the reagent container storage portion 140 in the X direction across the center axis C1. The two holders 510 hold the cooling units 500 such that the four cooling units 500 are disposed at predetermined cooling positions P10 at the bottom portion 312 of the reagent container storage portion 140. The cooling positions P10 may be defined such that distances from the respective cooling units 500 to the center axis C1 are equal to each other.

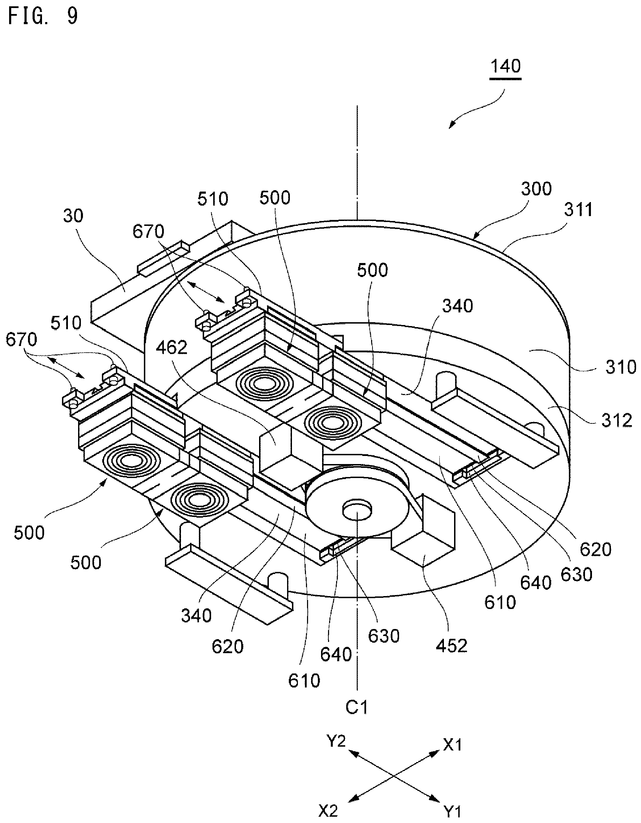

The holder 510 can be detachably mounted to the bottom plate 340 of the reagent container storage portion 140. As illustrated in FIG. 9, the bottom portion 312 of the reagent container storage portion 140 has two rails 620 extending in the Y direction, on both sides in the X direction across the center axis C1. The two rails 620 are positioned such that distances from the respective rails 620 to the center axis C1 are equal to each other. The rail 620 is disposed in a groove 610 formed at the lower surface of the bottom portion 312 of the reagent container storage portion 140 so as to extend in the Y direction.

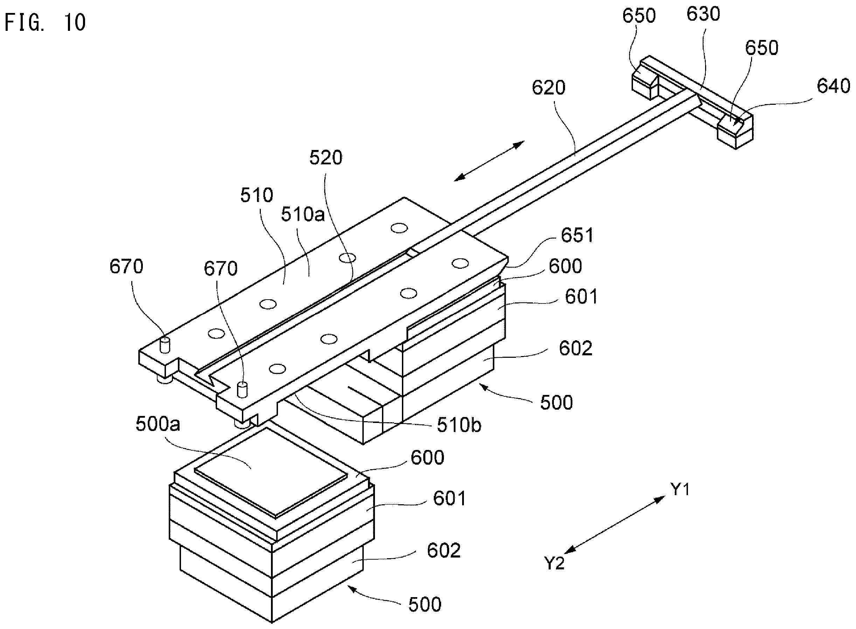

As illustrated in FIG. 10, a groove 520 is formed at the center of the upper surface 510a of the holder 510 so as to extend in the Y direction, and the rail 620 fits in the groove 520. The holder 510 can be moved along the rail 620 in the Y direction. That is, the holder 510 functions as a slider, and the two cooling units 500 can be moved from the cooling positions P10 in the Y direction.

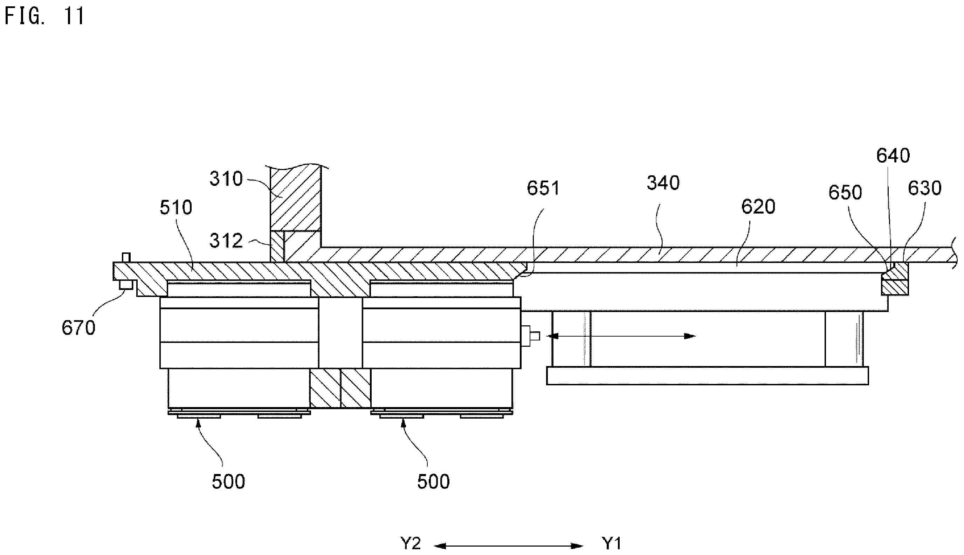

As illustrated in FIG. 9 and FIG. 11, the holder 510 can be moved along the rail 620 to the outside of the bottom portion 312 (the circumferential side portion 310). Furthermore, as illustrated in FIG. 2, the holder 510 can be moved along the rail 620 to the outside of the housing 10. The holder 510 may be moved to the outside of the housing 10 by removing the front cover 40 of the housing 10.

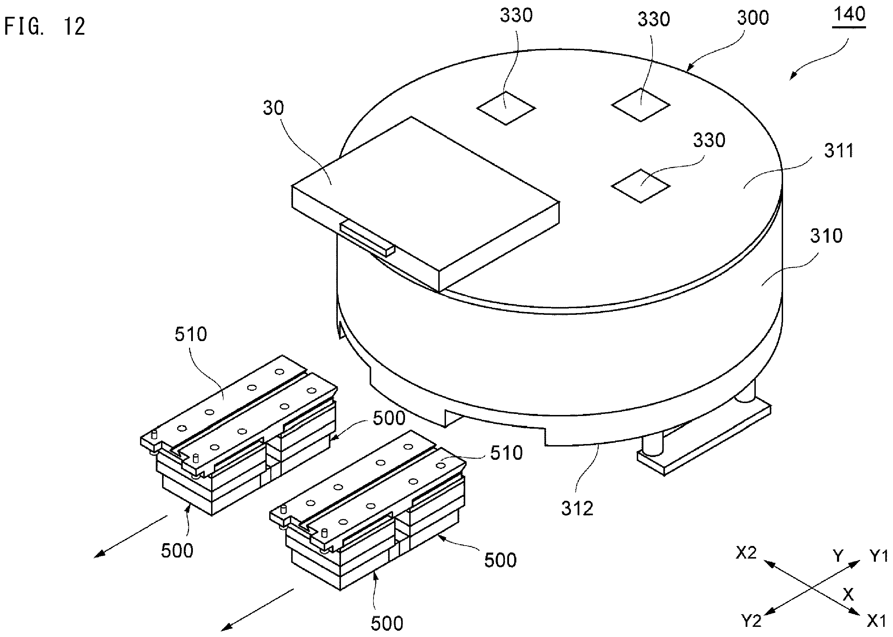

As illustrated in FIG. 12, the holder 510 is further moved onto an extension of the rail 620 and is thus dismounted from the rail 620. Thus, both the holder 510 and the cooling unit 500 can be dismounted from the bottom plate 340 (the bottom portion 312) of the reagent container storage portion 140. Furthermore, by mounting the holder 510 to the rail 620, the cooling unit 500 can be mounted to the bottom plate 340 (the bottom portion 312) of the reagent container storage portion 140.

As illustrated in FIG. 7 and FIG. 9 to FIG. 11, the bottom portion 312 of the reagent container storage portion 140 has a stopper 630 for stopping movement of the holder 510 when the cooling unit 500 has been moved to the cooling position P10.

As illustrated in FIG. 7, FIG. 10, and FIG. 11, the specimen measurement apparatus 1 has a pressing portion 640 for pressing the holder 510 against the bottom plate 340 when the cooling unit 500 has been moved to the cooling position P10. The pressing portion 640 has an inclined lower surface 651 which is disposed at the end portion of the holder 510 in the Y1 direction and is inclined so as to gradually ascend toward the end, and an inclined upper surface 650 which is disposed so as to oppose the end portion of the holder 510 and is inclined so as to gradually descend toward the end in the Y2 direction. The inclined upper surface 650 may be disposed at the stopper 630. As illustrated in FIG. 7, the inclined lower surface 651 and the inclined upper surface 650 fit to each other when the cooling unit 500 has been moved to the cooling position P10, and the holder 510 is thus pressed upward, so that the pressing portion 640 is pressed against the bottom plate 340.

The specimen measurement apparatus 1 may have a retaining member (fastening member) 670 such as a bolt for fastening the holder 510 to the bottom portion 312 (the bottom plate 340) in a state where the cooling unit 500 is positioned at the cooling position P10. The retaining member 670 is disposed at the rear end portion of the holder 510 in the Y2 direction. As illustrated in FIG. 6, a portion around the holder 510 may be covered by a heat insulating cover 680 forming a part of the bottom portion 312. The holder 510 may be moved together with the heat insulating cover 680. A handle 681 for drawing the holder 510 may be formed in the heat insulating cover 680.

As illustrated in FIG. 10, the cooling unit 500 may be detachably mounted to the holder 510. The cooling unit 500 may be dismounted from the holder 510 by using a fastening member such as a bolt.

### <Configuration of control unit of specimen measurement apparatus>

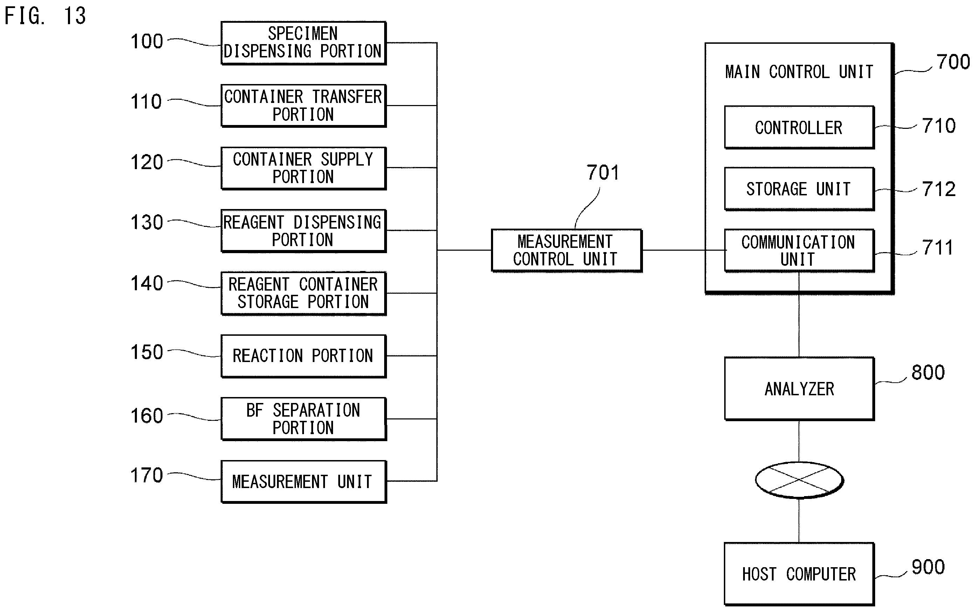

FIG. 13 illustrates an example of a configuration of a control unit of the specimen measurement apparatus 1. The specimen measurement apparatus 1 includes a main control unit 700 and a measurement control unit 701.

The main control unit 700 includes a controller 710, a communication unit 711, and a storage unit 712. The controller 710 includes a processor implemented by a CPU or a FPGA, and a memory, and can control each of the components of the specimen measurement apparatus 1 by executing a program stored in the storage unit 712. The storage unit 712 is implemented by a semiconductor storage element, and can store the program to be executed by the controller 710, measurement information obtained by the measurement unit 170, and the like. The communication unit 711 includes an I/O interface and a communication interface for communicating with an analyzer 800 and the measurement control unit 701.

The measurement control unit 701 has a communication circuit for communicating with each of the components of the specimen measurement apparatus 1 and the main control unit 700. The measurement control unit 701 can control operations of the specimen dispensing portion 100, the container transfer portion 110, the container supply portion 120, the reagent dispensing portion 130 (130a to 130e), the reagent container storage portion 140, the reaction portion 150, the BF separation portion 160, and the measurement unit 170 according to instructions from the controller 710 of the main control unit 700. The measurement control unit 701 can output measurement information obtained by the measurement unit 170 in a specimen measurement process, to the main control unit 700.

The analyzer 800 is implemented by a personal computer (PC), and may mainly include a main body including a CPU, a ROM, a RAM, a solid state drive (SSD), and the like, a display unit including a liquid crystal display, and an input device including a keyboard and a mouse.

The analyzer 800 is connected to the communication unit 711 of the main control unit 700 and a host computer 900 so as to be able to communicate therewith. The controller 710 can operate to transmit the measurement information obtained by measuring a specimen by the measurement unit 170, through the communication unit 711, to the analyzer 800. The analyzer 800 can analyze, for example, a content of a test substance in a specimen based on the obtained measurement information. Furthermore, the analyzer 800 can display an analysis result on a display screen of a display unit (monitor 60) and transmit the analysis result to the host computer 900.

### <Specimen measurement process>

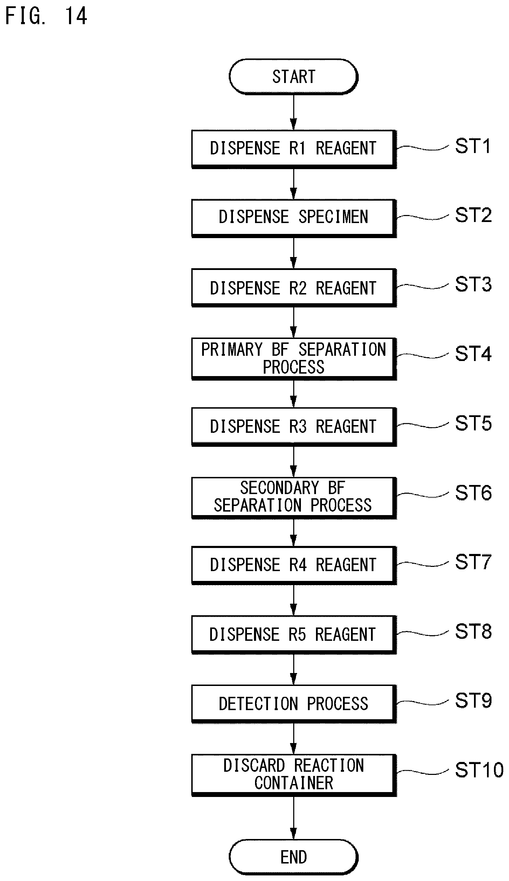

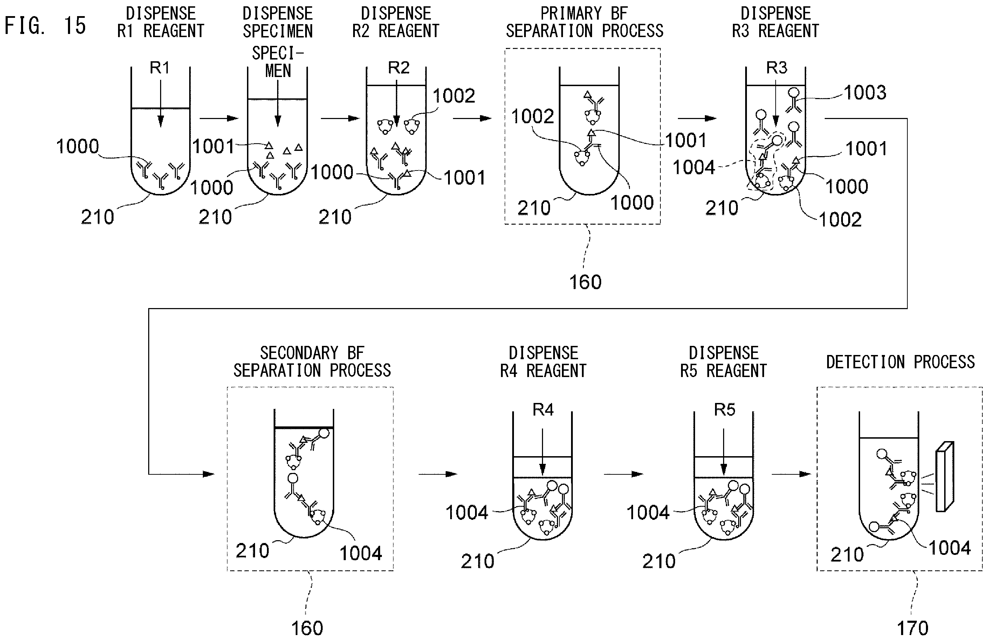

Next, a specimen measurement process performed by using the specimen measurement apparatus 1 will be described. The specimen measurement process is performed by the main control unit 700 and the measurement control unit 701. The specimen measurement process includes, for example, immunoassay. As the immunoassay, an example in which a test substance contained in a specimen is hepatitis B surface antigen (HBsAg) will be described. FIG. 14 is a flow chart showing an example of the immunoassay. FIG. 15 illustrates the immunoassay.

In step ST1 shown in FIG. 14, the R1 reagent is dispensed into the reaction container 210. The reaction container 210 is transferred to the R1 reagent dispensing position P4b by the container transfer portion 110 illustrated in FIG. 2. The R1 reagent in the reagent container 220 is suctioned at the suctioning position P4a of the reagent container storage portion 140 by the nozzle 250 of the first reagent dispensing portion 130a, and the R1 reagent is dispensed into the reaction container 210 at the R1 reagent dispensing position P4b. As illustrated in FIG. 15, the R1 reagent contains a capture substance 1000. The capture substance 1000 may be an antibody (biotin antibody) modified with biotin.

In step ST2 shown in FIG. 14, the specimen is dispensed into the reaction container 210. The reaction container 210 is transferred to the specimen dispensing position P2 by the container transfer portion 110 illustrated in FIG. 2. The specimen in the specimen container 200 is suctioned at the specimen suctioning position P1 by the nozzle 100a of the specimen dispensing portion 100, and the specimen is dispensed into the reaction container 210 at the specimen dispensing position P2. As illustrated in FIG. 15, the specimen contains a test substance 1001. The test substance 1001 contained in the specimen reacts with and binds to the capture substance 1000.

In step ST3 shown in FIG. 14, the R2 reagent is dispensed into the reaction container 210. The reaction container 210 is transferred to the R2 reagent dispensing position P5b by the container transfer portion 110 illustrated in FIG. 2. The R2 reagent in the reagent container 221 is suctioned at the suctioning position P5a of the reagent container storage portion 140 by the nozzle 260 of the second reagent dispensing portion 130b, and the R2 reagent is dispensed into the reaction container 210 at the R2 reagent dispensing position P5b. Thereafter, the reaction container 210 is transferred to the reaction portion 150 by the container transfer portion 110, and the reaction container 210 is heated in the reaction portion 150 for a predetermined time period. As illustrated in FIG. 15, the R2 reagent contains magnetic particles (solid-phase carrier) 1002 that bind to the capture substance 1000. The magnetic particles 1002 may be magnetic particles (StAvi-bound magnetic particles) having immobilized thereon streptavidin which binds to biotin. The test substance 1001 and the capture substance 1000 bind to the magnetic particle 1002.

In step ST4 shown in FIG. 14, a primary BF separation process is performed. The reaction container 210 is transferred to the BF separation portion 160 by the container transfer portion 110 illustrated in FIG. 2. In the BF separation portion 160, the primary BF separation process is performed for the sample in the reaction container 210. As illustrated in FIG. 15, in the BF separation portion 160, unnecessary components such as the unreacted capture substance 1000 which does not bind to the magnetic particles 1002 are removed from the reaction container 210.

In step ST5 shown in FIG. 14, the R3 reagent is dispensed into the reaction container 210. The reaction container 210 is transferred to the R3 reagent dispensing position P6b by the container transfer portion 110 illustrated in FIG. 2. The R3 reagent in the reagent container 222 is suctioned at the suctioning position P6a of the reagent container storage portion 140 by the nozzle 270 of the third reagent dispensing portion 130c, and the R3 reagent is dispensed into the reaction container 210 at the R3 reagent dispensing position P6b. Thereafter, the reaction container 210 is transferred to the reaction portion 150 by the container transfer portion 110, and the reaction container 210 is heated in the reaction portion 150 for a predetermined time period. As illustrated in FIG. 15, the R3 reagent contains a labeled substance 1003. The labeled substance 1003 may be an ALP (alkaline phosphatase) labeled antibody. The labeled substance 1003 reacts with and binds to the test substance 1001. An immune complex 1004 containing the test substance 1001, the labeled substance 1003, and the capture substance 1000 is formed on the magnetic particle 1002.

In step ST6 shown in FIG. 14, a secondary BF separation process is performed. The reaction container 210 is transferred to the BF separation portion 160 by the container transfer portion 110 illustrated in FIG. 2. In the BF separation portion 160, the secondary BF separation process is performed for the sample in the reaction container 210. As illustrated in FIG. 15, in the BF separation portion 160, unnecessary components such as the unreacted labeled substance 1003 which does not bind to the magnetic particles 1002 are removed from the reaction container 210.

In step ST7 shown in FIG. 14, the R4 reagent is dispensed into the reaction container 210. The reaction container 210 is transferred to the fourth reagent dispensing portion 130d by the container transfer portion 110 illustrated in FIG. 2, and the R4 reagent is dispensed into the reaction container 210 by the fourth reagent dispensing portion 130d. The R4 reagent contains a buffer. As illustrated in FIG. 15, the immune complex 1004 that binds to the magnetic particles 1002 in the reaction container 210 is dispersed in the buffer.

In step ST8 shown in FIG. 14, the R5 reagent is dispensed into the reaction container 210. The reaction container 210 is transferred to the fifth reagent dispensing portion 130e by the container transfer portion 110 illustrated in FIG. 2, and the R5 reagent is dispensed into the reaction container 210 by the fifth reagent dispensing portion 130e. After the R5 reagent is dispensed, the reaction container 210 is transferred to the reaction portion 150 by the container transfer portion 110, and the reaction container 210 is heated in the reaction portion 150 for a predetermined time period. The R5 reagent contains a chemiluminescent substrate. As illustrated in FIG. 15, the buffer contained in the R4 reagent has a composition that promotes reaction between a label (enzyme) of the labeled substance 1003 contained in the immune complex 1004, and the chemiluminescent substrate. Light is generated by reacting the substrate with the label through heating.

In step ST9 shown in FIG. 14, a process of detecting the immune complex 1004 is performed. The reaction container 210 is transferred to the measurement unit 170 by the container transfer portion 110 illustrated in FIG. 2. As illustrated in FIG. 15, an intensity of light generated by reacting the substrate with the label is measured by the measurement unit 170. The measurement data obtained by the measurement unit 170 is transmitted to the analyzer 800 through the measurement control unit 701 and the main control unit 700, and, for example, a content of the test substance in the specimen is measured by the analyzer 800.

In step ST10 shown in FIG. 14, the reaction container 210 is taken out from the measurement unit 170 by the container transfer portion 110, and discarded into a disposal outlet.

### <Maintenance>

In a case where maintenance of the cooling unit 500 is performed for the specimen measurement apparatus 1, the front cover 40 disposed at the front surface portion 20 of the housing 10 is firstly removed, the heat insulating cover 680 is subsequently removed, and fixing of the holder 510 and the bottom plate 340 to each other by the exposed retaining member 670 is released. Thereafter, the holder 510 is drawn. Specifically, the holder 510 is moved along the rail 620 in the Y2 direction, and is removed from the rail 620. Thus, the cooling unit 500 is removed from the bottom plate 340 of the reagent container storage portion 140 by the holder 510. Thereafter, the cooling unit 500 may be removed from the holder 510.

Subsequently, the holder 510 holding a new cooling unit 500 is mounted to the rail 620, and moved along the rail 620 in the Y1 direction. When the cooling unit 500 has been moved to the cooling position P10, the holder 510 is stopped by the stopper 630, and pressed against the bottom plate 340 by the pressing portion 640. In this state, the holder 510 and the bottom plate 340 are fixed by the retaining member 670. Thereafter, the front cover 40 is attached to the front surface portion 20 of the housing 10.

According to the present embodiment, the specimen measurement apparatus 1 includes the holder 510 that is slidably mounted to the reagent container storage portion 140 in a state where the holder 510 holds the cooling unit 500. Therefore, the position of the cooling unit 500 relative to the reagent container storage portion 140 can be shifted to a position suitable for the operation, so that the cooling unit 500 can be easily dismounted from and mounted to the reagent container storage portion 140.

The specimen measurement apparatus 1 includes the holder 510 having the holding surface 510b for holding the cooling unit 500 in a state where the holding surface 510b is in contact with the cooling surface 500a, and the contact surface 510a that comes into contact with the bottom plate 340 of the reagent container storage portion 140. Thus, heat transmission between the cooling unit 500 and the bottom plate 340 can be efficiently performed. When the cooling unit 500 is replaced, attention need not be paid in order to prevent air from entering between the cooling unit 500 and the bottom plate 340, and a screw or a bolt for fixing the cooling unit 500 to the bottom plate 340 need not be carefully fastened in order to prevent damage to the Peltier device, and thus, the cooling unit 500 can be easily replaced.

The holder 510 is configured to be movable along the bottom plate 340 in the horizontal direction. Therefore, the holder 510 holding the cooling unit 500 can be drawn from the outer portion, in the horizontal direction, of the reagent container storage portion 140. Thus, the cooling unit 500 can be easily dismounted and mounted.

The specimen measurement apparatus 1 further includes the rail 620 disposed along the horizontal direction at the bottom plate 340, and the holder 510 is movable along the rail 620. Therefore, the holder 510 can be suitably moved in the horizontal direction.

The rail 620 is disposed in the groove 610 formed in the bottom portion 312. Therefore, the holder 510 can efficiently transmit heat between the cooling unit 500 and the bottom plate 340.

The holder 510 is configured to be in surface contact with the bottom plate 340 in a state where the holder 510 is mounted to the rail 620. Therefore, the holder 510 can efficiently transmit heat between the cooling unit 500 and the bottom plate 340.

The holder 510 holds a plurality of the cooling units 500. Therefore, the plurality of the cooling units 500 can be efficiently dismounted and mounted.

The specimen measurement apparatus 1 includes a plurality of the rails 620 and a plurality of the holders 510 that move on the rails 620, respectively. Therefore, the plurality of the cooling units 500 can be efficiently dismounted and mounted.

The holder 510 can be detachably mounted to the rail 620. Therefore, by the holder 510 being dismounted from or mounted to the rail 620, the cooling unit 500 can be easily dismounted or mounted.

By moving the holder 510 onto an extension of the rail 620, the holder 510 is dismounted from the rail 620. Therefore, the holder 510 can be suitably mounted to and dismounted from the rail 620.

The specimen measurement apparatus 1 includes the stopper 630 for stopping movement of the holder 510 when the cooling unit 500 has been moved to the predetermined cooling position P10. Therefore, the position of the cooling unit 500 can be appropriately adjusted with ease.

The specimen measurement apparatus 1 includes the pressing portion 640 for pressing the holder 510 against the bottom plate 340 when the cooling unit 500 has been moved to the predetermined cooling position P10. Therefore, adhesion between the holder 510 and the bottom plate 340 is enhanced, and the holder 510 can efficiently transmit heat between the cooling unit 500 and the bottom plate 340.

The pressing portion 640 has the inclined lower surface 651 and the inclined upper surface 650, and the inclined lower surface 651 and the inclined upper surface 650 fit to each other when the cooling unit 500 has been moved to the cooling position P10. Thus, the holder 510 can be suitably pressed against the bottom plate 340.

The specimen measurement apparatus 1 includes the retaining member 670 for retaining the holder 510 to the bottom plate 340 in a state where the cooling unit 500 is positioned at the predetermined cooling position P10. Therefore, the holder 510 can be fixed (position-fixed) to the bottom plate 340.

The retaining member 670 is disposed at an end portion near the outer side of the bottom plate 340 in the holder 510. Therefore, an operator is allowed to easily access the retaining member 670 from the outside of the reagent container storage portion 140.

The holder 510 can be moved along the rail 620 to the outside of the bottom plate 340. Therefore, the operator is allowed to easily dismount and mount the cooling unit 500.

The holder 510 can be moved along the rail 620 to the outside of the apparatus housing 10 of the specimen measurement apparatus 1. Therefore, the operator is allowed to easily dismount and mount the cooling unit 500.

The cooling unit 500 can be detachably mounted to the holder 510. Therefore, for example, the cooling unit 500 is dismounted from the holder 510 and can be replaced with a new cooling unit 500.

### <Modifications>

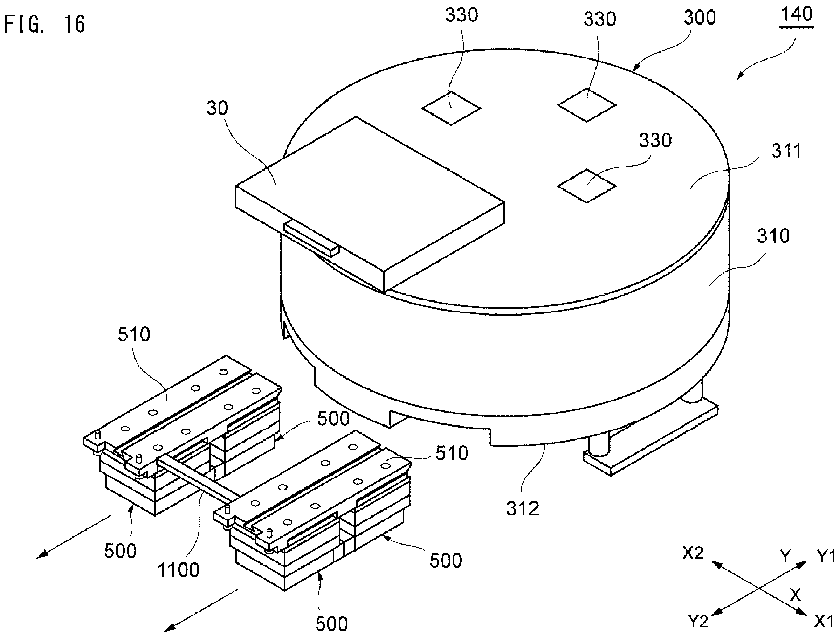

In the above-described embodiment, as illustrated in FIG. 16, the specimen measurement apparatus 1 may further include a connection member 1100 for connecting the plurality of the holders 510 to each other. In this case, the plurality of the holders 510 can be integrally moved.

The number of the cooling units 500 held by the holder 510 is not limited to two, and may be one, or three or more. Furthermore, the number of the holders 510 is not limited to two, and may be one, or three or more. In a case where the number of the holders 510 is plural, the number of the cooling units 500 held by the holder 510 may be different among the holders 510. The portion to be cooled in the reagent container storage portion 140 is not limited to the bottom portion 312 (the bottom plate 340), and another portion may be cooled. The configuration of the reagent container storage portion which is cooled by the cooling unit is not limited to that of the above-described embodiment. The reagent container storage portion cooled by the cooling unit may store reagent containers of other reagents such as the R4 reagent and the R5 reagent other than the R1 reagent, the R2 reagent, and the R3 reagent.

In the above-described embodiment, the holder 510 is moved in the horizontal direction, and is thus dismounted from the bottom plate 340 of the reagent container storage portion 140. However, the direction in which the holder 510 is moved is not limited to the horizontal direction. For example, the holder 510 may be moved in the up-down direction, and thus dismounted from the bottom plate 340 of the reagent container storage portion 140.

In the above-described embodiment, the specimen measurement apparatus performs immunoassay. However, the present invention can also be applied to a specimen measurement apparatus that performs another specimen measurement as long as the specimen measurement apparatus measures a specimen by using a reagent.

The above-described embodiments are for the purpose of description, and are not intended to limit the scope of the present disclosure. Various modifications of the above-described embodiments can be made without departing from the scope of the present disclosure. For example, a part of the components of one embodiment may be added to the configuration of another embodiment. Furthermore, a part of the components of one embodiment may be replaced with the corresponding components of another embodiment.

### DESCRIPTION OF THE REFERENCE CHARACTERS

- 1: specimen measurement apparatus
- 10: housing
- 140: reagent container storage portion
- 170: measurement unit
- 340: bottom plate
- 500: cooling unit
- 500a: cooling surface
- 510: holder
- 510a: contact surface (upper surface)
- 510b: holding surface (lower surface)

## Claims

1. A specimen measurement apparatus (1) comprising:
a measurement unit (170) configured to measure a specimen by using a reagent;
a reagent container storage portion (140) configured to store a reagent container in which the reagent is stored, the reagent container storage portion (140) including a heat insulating case (300), a container holding portion (301) to hold the reagent container (220, 221, 222) in the heat insulating case (300) and a fan (302), wherein the heat insulating case (300) has a disk-shaped bottom portion (312), and said bottom portion (312) has a bottom plate (340) formed of a metal;
a cooling unit (500) configured to cool the reagent container storage portion (140); and
a holder (510) slidably mounted to the reagent container storage portion (140) in a state where the holder (510) holds the cooling unit (500), wherein the holder (510) is movable along the bottom portion (312) of the reagent container storage portion (140).

2. The specimen measurement apparatus (1) of claim 1, further comprising a rail (620) disposed along a horizontal direction at the bottom portion (312), wherein
the holder (510) is mounted to the rail (620) and is movable along the rail.

3. The specimen measurement apparatus (1) of claim 2, wherein the rail is disposed in a groove formed in the bottom portion.

4. The specimen measurement apparatus (1) of claim 2, wherein the holder (510) is in surface contact with the bottom portion in a state where the holder (510) is mounted to the rail.

5. The specimen measurement apparatus (1) of claim 2, wherein the holder (510) holds a plurality of the cooling units (500).

6. The specimen measurement apparatus (1) of claim 2, comprising a plurality of the rails and a plurality of the holders (510) that are moved on the respective rails.

7. The specimen measurement apparatus (1) of claim 6, further comprising a connection member configured to connect the plurality of holders (510) to each other.

8. The specimen measurement apparatus (1) of claim 2, wherein the holder (510) is detachably mounted to the rail (620).

9. The specimen measurement apparatus (1) of claim 8, wherein the holder (510) is dismounted from the rail by moving onto an extension of the rail.

10. The specimen measurement apparatus (1) of claim 1, further comprising a stopper configured to stop movement of the holder (510) when the cooling unit (500) has been moved to a predetermined cooling position.

11. The specimen measurement apparatus (1) of claim 1, further comprising a pressing portion configured to press the holder (510) against the bottom portion when the cooling unit (500) has been moved to a predetermined cooling position.

12. The specimen measurement apparatus (1) of claim 11, wherein
the pressing portion comprises:
an inclined lower surface disposed at an end portion of the holder (510) and inclined so as to gradually ascend toward an end; and
an inclined upper surface (510a) disposed so as to oppose the end portion of the holder (510) at the bottom portion and inclined so as to gradually descend toward an end, wherein
the inclined lower surface and the inclined upper surface (510a) fit to each other when the cooling unit (500) has been moved to the cooling position.

13. The specimen measurement apparatus (1) of claim 1, further comprising a retaining member configured to retain the holder (510) to the bottom portion in a state where the cooling unit (500) is positioned at a predetermined cooling position.

14. A maintenance method for performing maintenance of a specimen measurement apparatus (1), wherein
the specimen measurement apparatus (1) comprises:
a measurement unit (170) configured to measure a specimen by using a reagent;
a reagent container storage portion (140) configured to store a reagent container in which the reagent is stored, the reagent container storage portion (140) including a heat insulating case (300), a container holding portion (301) to hold the reagent containers (220, 221, 222) in the heat insulating case (300) and a fan (302), wherein the heat insulating case (300) has a bottom portion (312), and said bottom portion (312) has a disk-shaped bottom plate (340) formed of a metal;
a cooling unit (500) configured to cool the reagent container storage portion (140); and
a holder (510) slidably mounted to the reagent container storage portion (140) in a state where the holder (510) holds the cooling unit (500), wherein the holder is movable along the bottom portion (312) of the reagent container storage portion (140);
the maintenance method comprising:
dismounting the holder (510) holding the cooling unit (500) from the reagent container storage portion (140); and
mounting the holder (510) holding a new cooling unit (500) or a new holder (510) holding a new cooling unit to the reagent container storage portion (140).

## Patentansprüche

1. Probenmessvorrichtung (1), umfassend: eine Messeinheit (170), die konfiguriert ist, um eine Probe unter Verwendung eines Reagens zu messen; einen Reagensbehälter-Aufbewahrungsabschnitt (140), der konfiguriert ist, um einen Reagensbehälter aufzubewahren, in dem das Reagens gelagert ist, wobei der Reagensbehälter-Aufbewahrungsabschnitt (140) ein wärmeisolierendes Gehäuse (300), einen Behälterhalteabschnitt (301) zum Halten des Reagensbehälters (220, 221, 222) in dem wärmeisolierenden Gehäuse (300) und ein Gebläse (302) aufweist , wobei das wärmeisolierende Gehäuse (300) einen scheibenförmigen Bodenabschnitt (312) aufweist und der Bodenabschnitt (312) eine Bodenplatte (340) aufweist, die aus einem Metall gebildet ist; eine Kühleinheit (500), die konfiguriert ist, um den Reagensbehälter-Aufbewahrungsabschnitt (140) zu kühlen; und einen Halter (510), der verschiebbar an dem Reagensbehälter-Aufbewahrungsabschnitt (140) in einem Zustand montiert ist, in dem der Halter (510) die Kühleinheit (500) hält, wobei der Halter (510) entlang des Bodenabschnitts (312) des Reagensbehälter-Aufbewahrungsabschnitts (140) bewegbar ist.

2. Probenmessvorrichtung (1) nach Anspruch 1, ferner umfassend eine Schiene (620), die entlang einer horizontalen Richtung an dem Bodenabschnitt (312) angeordnet ist, wobei der Halter (510) an der Schiene (620) montiert und entlang der Schiene bewegbar ist.

3. Probenmessvorrichtung (1) nach Anspruch 2, wobei die Schiene in einer in dem Bodenabschnitt ausgebildeten Nut angeordnet ist.

4. Probenmessvorrichtung (1) nach Anspruch 2, wobei der Halter (510) in Oberflächenkontakt mit dem Bodenabschnitt steht, in einem Zustand, in dem der Halter (510) an der Schiene montiert ist.

5. Probenmessvorrichtung (1) nach Anspruch 2, wobei der Halter (510) eine Vielzahl der Kühleinheiten (500) hält.

6. Probenmessvorrichtung (1) nach Anspruch 2, umfassend eine Vielzahl der Schienen und eine Vielzahl der Halter (510), die auf den jeweiligen Schienen bewegt werden.

7. Probenmessvorrichtung (1) nach Anspruch 6, ferner umfassend ein Verbindungselement, das konfiguriert ist, um die Vielzahl von Haltern (510) miteinander zu verbinden.

8. Probenmessvorrichtung (1) nach Anspruch 2, wobei der Halter (510) abnehmbar an der Schiene (620) montiert ist.

9. Probenmessvorrichtung (1) nach Anspruch 8, wobei der Halter (510) von der Schiene demontiert wird, indem er sich auf eine Verlängerung der Schiene bewegt.

10. Probenmessvorrichtung (1) nach Anspruch 1, ferner umfassend einen Stopper, der konfiguriert ist, um die Bewegung des Halters (510) zu stoppen, wenn die Kühleinheit (500) in eine vorbestimmte Kühlposition bewegt wurde.

11. Probenmessvorrichtung (1) nach Anspruch 1, ferner umfassend einen Pressabschnitt, der konfiguriert ist, um den Halter (510) gegen den Bodenabschnitt zu pressen, wenn die Kühleinheit (500) in eine vorbestimmte Kühlposition bewegt wurde.

12. Probenmessvorrichtung (1) nach Anspruch 11, wobei der Pressabschnitt umfasst: eine geneigte untere Fläche, die an einem Endabschnitt des Halters (510) angeordnet und so geneigt ist, dass sie zu einem Ende hin allmählich ansteigt ; und eine geneigte obere Fläche (510a), die so angeordnet ist, dass sie dem Endabschnitt des Halters (510) am Bodenabschnitt gegenüberliegt und so geneigt ist, dass sie zu einem Ende hin allmählich abfällt, wobei die geneigte untere Fläche und die geneigte obere Fläche (510a) ineinandergreifen, wenn die Kühleinheit (500) in die Kühlposition bewegt wurde.

13. Probenmessvorrichtung (1) nach Anspruch 1, ferner umfassend ein Rückhalteelement, das konfiguriert ist, um den Halter (510) an dem Bodenabschnitt in einem Zustand zurückzuhalten, in dem die Kühleinheit (500) an einer vorbestimmten Kühlposition positioniert ist.

14. Wartungsverfahren zur Durchführung der Wartung einer Probenmessvorrichtung (1), wobei die Probenmessvorrichtung (1) umfasst: eine Messeinheit (170), die konfiguriert ist, um eine Probe unter Verwendung eines Reagens zu messen ; einen Reagensbehälter-Aufbewahrungsabschnitt (140), der konfiguriert ist, um einen Reagensbehälter aufzubewahren, in dem das Reagens gelagert ist, wobei der Reagensbehälter-Aufbewahrungsabschnitt (140) ein wärmeisolierendes Gehäuse (300), einen Behälterhalteabschnitt (301) zum Halten der Reagensbehälter (220, 221, 222) in dem wärmeisolierenden Gehäuse (300) und ein Gebläse (302) aufweist , wobei das wärmeisolierende Gehäuse (300) einen Bodenabschnitt (312) aufweist und der Bodenabschnitt (312) eine scheibenförmige Bodenplatte (340) aufweist, die aus einem Metall gebildet ist ; eine Kühleinheit (500), die konfiguriert ist, um den Reagensbehälter-Aufbewahrungsabschnitt (140) zu kühlen ; und einen Halter (510), der verschiebbar an dem Reagensbehälter-Aufbewahrungsabschnitt (140) in einem Zustand montiert ist, in dem der Halter (510) die Kühleinheit (500) hält, wobei der Halter entlang des Bodenabschnitts (312) des Reagensbehälter-Aufbewahrungsabschnitts (140) bewegbar ist ; wobei das Wartungsverfahren umfasst: Demontieren des die Kühleinheit (500) haltenden Halters (510) von dem Reagensbehälter-Aufbewahrungsabschnitt (140) ; und Montieren des eine neue Kühleinheit (500) haltenden Halters (510) oder eines eine neue Kühleinheit haltenden neuen Halters (510) an dem Reagensbehälter-Aufbewahrungsabschnitt (140).

## Revendications

1. Appareil de mesure de spécimen (1) comprenant : une unité de mesure (170) configurée pour mesurer un spécimen en utilisant un réactif; une partie de stockage de récipient de réactif (140) configurée pour stocker un récipient de réactif dans lequel le réactif est stocké, la partie de stockage de récipient de réactif (140) incluant un boîtier thermiquement isolant (300), une partie de maintien de récipient (301) pour maintenir le récipient de réactif (220, 221, 222) dans le boîtier thermiquement isolant (300) et un ventilateur (302) , dans lequel le boîtier thermiquement isolant (300) présente une partie de fond en forme de disque (312), et ladite partie de fond (312) présente une plaque de fond (340) formée d'un métal; une unité de refroidissement (500) configurée pour refroidir la partie de stockage de récipient de réactif (140); et un support (510) monté de manière coulissante sur la partie de stockage de récipient de réactif (140) dans un état où le support (510) maintient l'unité de refroidissement (500), dans lequel le support (510) est mobile le long de la partie de fond (312) de la partie de stockage de récipient de réactif (140).

2. Appareil de mesure de spécimen (1) selon la revendication 1, comprenant en outre un rail (620) disposé le long d'une direction horizontale au niveau de la partie de fond (312), dans lequel le support (510) est monté sur le rail (620) et est mobile le long du rail.

3. Appareil de mesure de spécimen (1) selon la revendication 2, dans lequel le rail est disposé dans une rainure formée dans la partie de fond.

4. Appareil de mesure de spécimen (1) selon la revendication 2, dans lequel le support (510) est en contact de surface avec la partie de fond dans un état où le support (510) est monté sur le rail.

5. Appareil de mesure de spécimen (1) selon la revendication 2, dans lequel le support (510) maintient une pluralité d'unités de refroidissement (500).

6. Appareil de mesure de spécimen (1) selon la revendication 2, comprenant une pluralité de rails et une pluralité de supports (510) qui sont déplacés sur les rails respectifs.

7. Appareil de mesure de spécimen (1) selon la revendication 6, comprenant en outre un élément de connexion configuré pour connecter la pluralité de supports (510) les uns aux autres.

8. Appareil de mesure de spécimen (1) selon la revendication 2, dans lequel le support (510) est monté de manière amovible sur le rail (620).

9. Appareil de mesure de spécimen (1) selon la revendication 8, dans lequel le support (510) est démonté du rail en se déplaçant sur une extension du rail.

10. Appareil de mesure de spécimen (1) selon la revendication 1, comprenant en outre une butée configurée pour arrêter le mouvement du support (510) lorsque l'unité de refroidissement (500) a été déplacée vers une position de refroidissement prédéterminée.

11. Appareil de mesure de spécimen (1) selon la revendication 1, comprenant en outre une partie de pressage configurée pour presser le support (510) contre la partie de fond lorsque l'unité de refroidissement (500) a été déplacée vers une position de refroidissement prédéterminée.

12. Appareil de mesure de spécimen (1) selon la revendication 11, dans lequel la partie de pressage comprend : une surface inférieure inclinée disposée au niveau d'une partie d'extrémité du support (510) et inclinée de manière à monter progressivement vers une extrémité ; et une surface supérieure inclinée (510a) disposée de manière à s'opposer à la partie d'extrémité du support (510) au niveau de la partie de fond et inclinée de manière à descendre progressivement vers une extrémité, dans lequel la surface inférieure inclinée et la surface supérieure inclinée (510a) s'ajustent l'une à l'autre lorsque l'unité de refroidissement (500) a été déplacée vers la position de refroidissement.

13. Appareil de mesure de spécimen (1) selon la revendication 1, comprenant en outre un élément de retenue configuré pour retenir le support (510) sur la partie de fond dans un état où l'unité de refroidissement (500) est positionnée au niveau d'une position de refroidissement prédéterminée.

14. Procédé de maintenance pour effectuer la maintenance d'un appareil de mesure de spécimen (1), dans lequel l'appareil de mesure de spécimen (1) comprend : une unité de mesure (170) configurée pour mesurer un spécimen en utilisant un réactif ; une partie de stockage de récipient de réactif (140) configurée pour stocker un récipient de réactif dans lequel le réactif est stocké, la partie de stockage de récipient de réactif (140) incluant un boîtier thermiquement isolant (300), une partie de maintien de récipient (301) pour maintenir les récipients de réactifs (220, 221, 222) dans le boîtier thermiquement isolant (300) et un ventilateur (302) , dans lequel le boîtier thermiquement isolant (300) présente une partie de fond (312), et ladite partie de fond (312) présente une plaque de fond en forme de disque (340) formée d'un métal ; une unité de refroidissement (500) configurée pour refroidir la partie de stockage de récipient de réactif (140) ; et un support (510) monté de manière coulissante sur la partie de stockage de récipient de réactif (140) dans un état où le support (510) maintient l'unité de refroidissement (500), dans lequel le support est mobile le long de la partie de fond (312) de la partie de stockage de récipient de réactif (140) ; le procédé de maintenance comprenant : le démontage du support (510) maintenant l'unité de refroidissement (500) de la partie de stockage de récipient de réactif (140) ; et le montage du support (510) maintenant une nouvelle unité de refroidissement (500) ou d'un nouveau support (510) maintenant une nouvelle unité de refroidissement sur la partie de stockage de récipient de réactif (140).
